# FASCICULE DE BREVET EUROPEEN

(11) **EP 2 953 805 B1**
(45) Date de publication et mention de la délivrance du brevet: **10.04.2019**
(21) Numéro de dépôt: 14706890.2
(22) Date de dépôt: 05.02.2014
(51) Int. Cl.: H02J 7/14, B60K 6/12, B60K 6/26

(54) **VEHICULE HYBRIDE**
HYBRIDFAHRZEUG
HYBRID VEHICLE

(30) Priorité: 07.02.2013 FR 1351057
(43) Date de publication de la demande: 16.12.2015
(73) Titulaire: Technoboost, 75116 Paris (FR)
(72) Inventeur: SABRIE, Julien, F-75013 Paris (FR); PIGOT, Etienne, F-78960 Voisins Le Bretonneux (FR); YARCE, Andres, F-92000 Nanterre (FR)
(74) Mandataire: Fernandez, Francis Lionel
(86) Numéro de dépôt international: PCT/FR2014/050216
(87) Numéro de publication internationale: WO 2014/122396

(56) Documents cités:
- EP-A2- 0 510 582
- EP-A2- 2 319 718
- EP-A2- 2 532 548
- WO-A1-2008/154752
- WO-A1-2009/010819
- DE-A1-102007 058 974
- US-A- 4 588 040
- US-A1- 2007 095 587
- US-A1- 2010 219 007

## Description

La présente invention concerne de manière générale un véhicule hybride comprenant un premier groupe propulseur thermique et un deuxième groupe propulseur utilisant une autre énergie.

Il est connu dans l'art antérieur des véhicules hybrides. En particulier, US2010/0219007 A1 décrit un véhicule hybride correspondant au préambule de la revendication 1 et au préambule de la revendication 5. Le premier groupe propulseur est généralement accouplé à un alternateur pour alimenter un réseau de bord et recharger une batterie. En contrepartie, ce système présente notamment les inconvénients suivants.

La consommation de carburant n'est pas optimale : en effet lorsque le premier groupe propulseur thermique est arrêté, l'énergie électrique est fournie par la batterie. Cette énergie aura été préalablement chargée par l'alternateur puis stockée dans la batterie puis déstockée, ce qui fait une cascade de rendement important néfaste à l'efficacité globale.

La durée de vie de la batterie est faible : en effet elle est prévue uniquement pour des cycles de faible amplitude (le cycle correspond à la quantité de courant que la batterie doit échanger). Dans ce véhicule, le cycle de la batterie est très important et sa durée de vie sera courte.

La sécurité : dans certaines situations de vie, certains organes de sécurité (tel que ceux d'un dispositif de correction de trajectoire par exemple) demandent des courants importants qu'il faut être capable de fournir sans affecter la tension du réseau de bord. Si le premier groupe propulseur est éteint, seule la batterie peut fournir ce courant mais sa tension va diminuer. Cette situation est rédhibitoire au-dessus d'une certaine vitesse.

Il est connu de remédier à ces inconvénients en ajoutant au véhicule un stockage de grande capacité électrique tel qu'un super condensateur et un convertisseur de tension, mais le coût du véhicule est augmenté par l'ajout de ces composants.

Un but de la présente invention est de répondre aux inconvénients de l'art antérieur mentionnés ci-dessus et en particulier, tout d'abord, de proposer un véhicule hybride simple dont la tension du réseau de bord est stable, même si le premier groupe propulseur thermique est éteint.

Pour cela un premier aspect de l'invention concerne un véhicule hybride selon la revendication 1. Le véhicule selon cette mise en oeuvre comporte un alternateur accouplé au deuxième groupe propulseur, de sorte qu'il sera entraîné par ce dernier, même lorsque le premier groupe propulseur sera éteint. La tension du réseau de bord est donc soutenue par cet alternateur, qui pourra alimenter des appareils de forte puissance si besoin. La batterie pourra même être rechargée lors de l'utilisation du deuxième groupe propulseur. Il en résulte que la tension du réseau de bord sera stable pendant l'utilisation du deuxième groupe propulseur, et que la batterie sera moins sollicitée en fourniture de courant.

Selon un mode de réalisation, le véhicule comprend des roues motrices et un accouplement débrayable agencé entre les roues motrices et le deuxième groupe propulseur. Selon cette mise en oeuvre, le deuxième groupe propulseur peut être mis en fonctionnement indépendamment de la rotation des roues motrices. On peut alors envisager de mettre en fonctionnement le deuxième groupe propulseur uniquement pour entraîner l'alternateur, pour alimenter en énergie électrique le réseau de bord, et cela même à l'arrêt du véhicule.

Selon un mode de réalisation, l'accouplement débrayable est un crabot.

Selon un mode de réalisation, l'alternateur est un alterno-démarreur. Celui-ci peut alors même participer à la traction du véhicule.

Un second aspect de l'invention est un procédé de production d'énergie électrique pour alimenter un réseau électrique d'un véhicule selon la revendication 5.
- Selon un mode de réalisation, le véhicule comprend :
- des roues motrices,
- un accouplement débrayable agencé entre les roues motrices et le deuxième groupe propulseur,
le procédé comprend les étapes consistant à :
- arrêter le véhicule,
- débrayer l'accouplement agencé entre les roues motrices et le deuxième groupe propulseur,
- démarrer le deuxième groupe propulseur pour produire de l'énergie électrique avec l'alternateur accouplé avec le deuxième groupe propulseur.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :

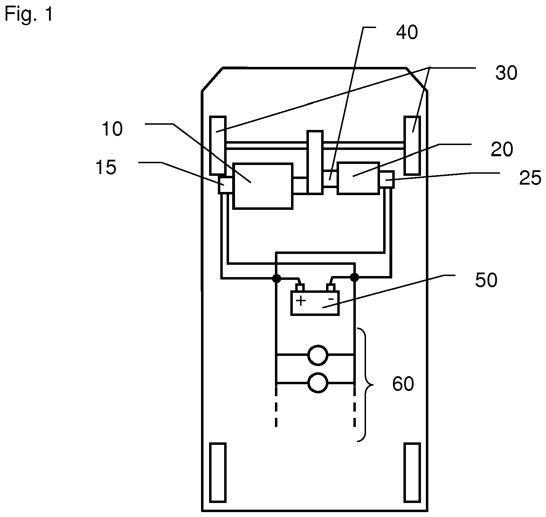

- la figure 1 représente une vue schématique d'un véhicule selon l'invention.

Dans la présente demande, on entend par groupe propulseur thermique un moteur thermique à combustion, et en particulier un moteur à combustion interne tel qu'un moteur à explosion.

La figure 1 représente un véhicule hybride avec des roues motrices 30 motorisées par un premier groupe propulseur 10, thermique, et/ou par un deuxième groupe propulseur 20, utilisant une autre énergie. On peut envisager d'utiliser un deuxième groupe propulseur 20 pneumatique, hydraulique, ou électrique. Le premier groupe propulseur 10 est accouplé à un alternateur 15 pour recharger une batterie 50 ou alimenter un réseau de bord 60 comportant les divers appareils électriques du véhicule, lorsque véhicule est utilisé en mode thermique, c'est-à-dire avec le premier groupe propulseur allumé.

De plus, le véhicule comporte le deuxième groupe propulseur 20 pour proposer une énergie de propulsion alternative à celle utilisée par le premier groupe propulseur 10. Cependant, lorsque le premier groupe propulseur 10 n'est plus utilisé, l'alternateur 15 ne peut plus fournir de courant à la batterie 50 ou au réseau de bord 60. A cet effet, le deuxième groupe propulseur 20 est accouplé à un alternateur 25 qui sera entraîné dès que le deuxième groupe propulseur 20 est allumé.

Le premier groupe propulseur 10 et le deuxième groupe propulseur 20 sont reliés aux roues motrices 30 du véhicule par l'intermédiaire d'une transmission. Cette transmission comprend en particulier un accouplement 40 (un crabot par exemple) agencé entre les roues motrices 30 et le deuxième groupe propulseur 20. Cet accouplement 40 est débrayable pour permettre, lorsque le véhicule est à l'arrêt avec le premier groupe propulseur 10 éteint, de pouvoir désolidariser les roues motrices 30 du deuxième groupe propulseur 20. Celui-ci peut alors être mis en service pour entraîner l'alternateur 25 afin de recharger la batterie 50 et/ou alimenter en énergie électrique le réseau de bord 60. De cette manière, la tension du réseau de bord reste stable car l'alternateur 25 peut fournir de grandes quantités d'énergie, et la batterie 50 n'est pas sollicitée pour fournir du courant, ce qui augmente sa durée de vie.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Véhicule hybride comprenant un premier groupe propulseur (10), thermique, accouplé à un premier alternateur (15) pour recharger une batterie (50) ou alimenter le réseau électrique du véhicule (60) et un deuxième groupe propulseur (20), utilisant une autre énergie, le deuxième groupe propulseur étant un moteur électrique, **caractérisé en ce que** le véhicule comprend au moins un deuxième alternateur (25) accouplé au deuxième groupe propulseur (20) et alimentant le réseau électrique (60) du véhicule.

2. Véhicule selon la revendication 1, **caractérisé en ce qu'**il comprend des roues motrices (30) et un accouplement (40) débrayable agencé entre les roues motrices (30) et le deuxième groupe propulseur (20).

3. Véhicule selon la revendication 2, **caractérisé en ce que** l'accouplement (40) débrayable est un crabot.

4. Véhicule selon l'une des revendications 1 à 3, **caractérisé en ce que** l'alternateur (25) est un alterno-démarreur.

5. Procédé de production d'énergie électrique pour alimenter un réseau électrique (60) d'un véhicule comprenant :
• un premier groupe propulseur (10), thermique, accouplé à un premier alternateur (15) pour recharger une batterie (50) ou alimenter le réseau électrique du véhicule (60)
• un deuxième groupe propulseur (20), utilisant une autre énergie, le deuxième groupe propulseur étant un moteur électrique,
• un deuxième alternateur (25) accouplé au deuxième groupe propulseur (20) et alimentant le réseau électrique (60) du véhicule,
le procédé étant **caractérisé en ce qu'**il comprend les étapes consistant à :
• éteindre le premier groupe propulseur (10),
• démarrer le deuxième groupe propulseur (20) pour produire de l'énergie électrique avec l'alternateur (25) accouplé avec le deuxième groupe propulseur (20).

6. Procédé selon la revendication 5, le véhicule comprenant :
• des roues motrices (30),
• un accouplement (40) débrayable agencé entre les roues motrices (30) et le deuxième groupe propulseur (20),
le procédé comprenant les étapes consistant à :
• arrêter le véhicule,
• débrayer l'accouplement (40) agencé entre les roues motrices (30) et le deuxième groupe propulseur (20),
• démarrer le deuxième groupe propulseur (20) pour produire de l'énergie électrique avec l'alternateur (25) accouplé avec le deuxième groupe propulseur (20).

## Patentansprüche

1. Hybridfahrzeug, das ein erstes thermisches Antriebsaggregat (10) umfasst, das mit einem ersten Wechselstromgenerator (15) zum Aufladen einer Batterie (50) oder Versorgen des elektrischen Netzwerks des Fahrzeugs (60) gekoppelt ist, und ein zweites Antriebsaggregat (20), das eine andere Energie verwendet, wobei das zweite Antriebsaggregat ein Elektromotor ist, **dadurch gekennzeichnet, dass** das Fahrzeug mindestens einen zweiten Wechselstromgenerator (25) umfasst, der mit dem zweiten Antriebsaggregat (20) gekoppelt ist und das elektrische Netzwerk (60) des Fahrzeugs versorgt.

2. Fahrzeug nach Anspruch 1, **dadurch gekennzeichnet, dass** es Antriebsräder (30) und eine auskuppelbare Kupplung (40), die zwischen den Antriebsrädern (30) und dem zweiten Antriebsaggregat (20) eingerichtet ist, umfasst.

3. Fahrzeug nach Anspruch 2, **dadurch gekennzeichnet, dass** die auskuppelbare Kupplung (40) eine Kuppelmuffenklaue ist.

4. Fahrzeug nach einem der Ansprüche 1 bis 3, **dadurch gekennzeichnet, dass** der Wechselstromgenerator (25) ein Startergenerator ist.

5. Verfahren zum Erzeugen elektrischer Energie zum Versorgen eines elektrischen Netzwerks (60) eines Fahrzeugs, das Folgendes umfasst
• ein erstes thermisches Antriebsaggregat (10), das mit einem ersten Wechselstromgenerator (15) gekoppelt ist, um eine Batterie (50) aufzuladen oder das elektrische Netzwerk des Fahrzeugs (60) zu versorgen,
• ein zweites Antriebsaggregat (20), das eine andere Energie verwendet, wobei das zweite Antriebsaggregat ein Elektromotor ist,
• einen zweiten Wechselstromgenerator (25), der mit dem zweiten Antriebsaggregat (20) gekoppelt ist und das elektrische Netzwerk (60) des Fahrzeugs versorgt,
Verfahren **dadurch gekennzeichnet, dass** es die Schritte umfasst, die bestehen aus:
• Ausschalten des ersten Antriebsaggregats (10),
• Starten des zweiten Antriebsaggregats (20), um elektrische Energie mit dem Wechselstromgenerator (25), der mit dem zweiten Antriebsaggregat (20) gekoppelt ist, zu erzeugen.

6. Verfahren nach Anspruch 5, wobei das Fahrzeug Folgendes umfasst:
• Antriebsräder (30),
• eine auskuppelbare Kupplung (40), die zwischen den Antriebsrädern (30) und dem zweiten Antriebsaggregat (20) eingerichtet ist,
wobei das Verfahren die Schritte umfasst, die bestehen aus:
• Stoppen des Fahrzeugs,
• Auskuppeln der Kupplung (40), die zwischen den Antriebsrädern (30) und dem zweiten Antriebsaggregat (20) eingerichtet ist,
• Starten des zweiten Antriebsaggregats (20), um elektrische Energie mit dem Wechselstromgenerator (25), der mit dem zweiten Antriebsaggregat (20) gekoppelt ist, zu erzeugen.

## Claims

1. A hybrid vehicle including a first heat powertrain (10), coupled to a first alternator (15) for recharging a battery (50) or for supplying the electrical network of the vehicle (60), and a second powertrain (20), using a different energy, the second powertrain being an electric motor, **characterized in that** the vehicle includes at least a second alternator (25) coupled to the second powertrain (20) and supplying the electrical network (60) of the vehicle.

2. The vehicle according to Claim 1, **characterized in that** it includes drive wheels (30) and a switchable coupling (40) arranged between the drive wheels (30) and the second powertrain (20).

3. The vehicle according to Claim 2, **characterized in that** the switchable coupling (40) is a dog clutch.

4. The vehicle according to one of Claims 1 to 3, **characterized in that** the alternator (25) is a starter-alternator.

5. A method for the production of electrical energy for supplying an electrical network (60) of a vehicle, including:
• a first heat powertrain (10), coupled to a first alternator (15) for recharging a battery (50) or for supplying the electrical network of the vehicle (60)
• a second powertrain (20), using a different energy, the second powertrain being an electric motor,
• a second alternator (25) coupled to the second powertrain (20) and supplying the electrical network (60) of the vehicle,
the method being **characterized in that** it includes the steps consisting of:
• switching off the first powertrain (10),
• starting the second powertrain (20) for producing electrical energy with the alternator (25) coupled with the second powertrain (20).

6. The method according to Claim 5, the vehicle including:
• drive wheels (30),
• a switchable coupling (40) arranged between the drive wheels (30) and the second powertrain (20),
the method including the steps consisting of:
• stopping the vehicle,
• switching the coupling (40) arranged between the drive wheels (30) and the second powertrain (20),
• starting the second powertrain (20) for producing electrical energy with the alternator (25) coupled with the second powertrain (20).
